# EUROPEAN PATENT APPLICATION

(11) **EP 1 959 444 A1**
(43) Date of publication of application: **20.08.2008**
(21) Application number: 07004780.8
(22) Date of filing: 08.03.2007
(51) Int. Cl.: G11B 7/252, G11B 7/257

(54) **Optical storage medium**

(71) Applicant: ODS Technology GmbH, 23942 Dassow (DE)
(72) Inventor: Nute, Roger, 49490 Chigné (FR); Fetouhi, Hilal, 77100 Nanteuil-lès-Meaux (FR)
(74) Representative: Peterreins, Frank

(57) **Abstract**

An optical storage medium comprises at least one substrate, at least one information layer for storing data and at least one reactive substance. The reactive substance is an inorganic substance causing a chemical reaction with the information layer where H₂O is either an initial or a final product of the chemical reaction. The at least one reactive substance may be arranged at least one spot or layer in contact with the information layer. The readability of the optical storage medium may be adjustably limited by a temporally defined deterioration of the readability, more precisely of the reflectivity of the reflective information layer. The deterioration of the readability may be initiated by the first use of the inventive storage medium by a customer, said in other words the deterioration of the readability may be initiated by heat applied by the laser beam of a disc drive and/or the system temperature of the player. Therefore the deterioration of the readability depends on the time after the first use.

## Description

### Technical background:

The invention is related to an optical storage medium and in particular to an optical storage medium comprising at least one information layer and at least one reactive substance.

Optical storage media such as CDs and DVDs are sold and rented to consumers. The content of the optical storage media may be music, movies, software or data. The value of the information encoded on the discs is generally higher than the manufacturing cost of the optical storage media. Content providers, such as movie studios or software companies, do not want to sell at low cost copies of their information that will have a long lifetime in the marketplace and consumers frequently want to access content information only for a brief period and at a low cost. Rentals of CDs and DVDs enable consumers to access content information at a lower cost than if consumers had to purchase the media, but the need to return the physical media is inconvenient.

Like this, it would be desirable to have an optical storage media with limited readability that the user could purchase at a low cost, and which would not have the disadvantage of having to be returned. The content providers can adjust the period of readability of the optical storage media, if necessary also in agreement with the consumer. It would also be desirable to manufacture such optical storage media at low cost and with minimum changes to existing manufacturing processes for optical storage media. Finally, in order for the content providers to be willing to provide their content through optical storage media with limited readability, the mechanism that limits readability of the media should not enabling access to the content beyond the intended period of use and should not be easy to evade.

US 6,338,933 B1 discloses methods and apparatus for making an optically readable media unreadable. The method includes steps of providing the media with an optically activated mechanism that degrades the reflectivity of a surface wherein information is encoded; exposing the media to optical radiation for reading out the information; and, during the step of exposing, initiating the operation of the optically activated mechanism. In one embodiment the step of initiating includes steps of generating singlet oxygen in an oxygen loaded photosensitizer layer disposed on the media; and reacting the singlet oxygen with a metal-containing layer for oxidizing the surface of the metal-containing layer, thereby degrading the reflectivity of the surface. In a further aspect the optically activated mechanism causes a defocusing of a readout beam, thereby degrading reflection of the readout beam from a surface wherein information is encoded.

For the optical disc disclosed in US 6,338,933 B1, an oxygen loaded photosensitizer layer is required, in which singlet oxygen for the corrosive attack of the information layer is generated. This generation of singlet oxygen in the photosensitizer layer can be initiated and continued by all kinds of electromagnetic radiation, i.e. normal light. Like this, the beginning and the progress of the deterioration of the readability of the information layer depends on the handling during production and usage and is so difficult to adjust.

US 6,011,772 discloses an optical disc having machine-readable, information-encoding features provided with a barrier layer secured to the disc. This barrier layer is configured to prevent machine-reading of the features. A reading-inhibit agent, included in the disc and activated by removal of the barrier layer, is operative, once activated, to alter the disc to inhibit reading of the disc. Alternately, the barrier layer can be eliminated, and the reading-inhibit agent can be activated by initial reading of the disc, as for example by exposure to optical radiation associated with reading of the disc, or rotation of the disc.

The optical disc disclosed in US 6,011,772 has the drawback that a barrier layer, like an air-tight protective cover is needed for the optical disc, as long as the deterioration of the readability of the optical disc is not supposed to start. This air-tight protective cover leads to extra costs for production and quality assurance. Besides it is quite uncomfortable for the consumer to keep permanently an eye on the integrity of the air-tight protective cover, as long as he does not want to read or play the disc.

### Summary of the invention:

It is an object of the present invention to provide an improved optical storage medium with an adjustable temporally limited usability, which is easy to manufacture and to handle.

This object is achieved by an optical storage medium as defined in claims 1, 2 and 3. The dependent claims depict advantageous embodiments of the invention.

The present invention is directed to an optical storage medium comprising at least one substrate, at least one information layer for storing data and at least one reactive substance. According to a first aspect of the present invention, the reactive substance contains at least one inorganic substance - in particular bases, acids, salts of metals and/or their hydrates - which may be arranged at at least one spot or layer in contact with the information layer. Preferably, the reactive substance contains CuCl₂, CuCl₂ x 2 H₂O hydrate, NaOH, NaHCO₃ and/or NaSO₄ x 10 H₂O hydrate. Also salts of other metals may be used. These salts of metals should preferably have a standard electrode potential higher than aluminium.

The inorganic substance is suitable for deteriorating or destroying the readability of the optical storage medium by destroying or attacking the information layer, more precisely the reflectivity of the information layer, due to chemical reactions. These chemical reactions may be initiated by heat applied by the laser beam of a disc drive and/or the system temperature of the player. Said in other words, the chemical reactions causing the deterioration of the readability may be initiated by the first use of the inventive storage medium by a customer.

According to a second aspect of the present invention, the chemical reactions between the reactive substance and the information layer are driven by diffusion of H₂O. The chemical reactions may also be driven by a combination of diffusion of H₂O and heat during reading information by an optical beam. The degradation of readability of the optical storage medium may accelerate with exposure of the reactive substance to heat during reading information by an optical beam, which may be a laser beam.

According to a third aspect of the present invention, these chemical reactions comprise vapour lock in the information layer, the substrate and/or in between the information layer and the substrate and/or corrosion of the information layer. Vapour lock means that gaseous species are released by chemical reactions between the reactive substance and the information layer and by heat during reading information by an optical beam. One of the advantages of vapour lock lies in its usability with optical storage media with aluminium information layers and/or information layers made of noble metals as silver or gold.

The time period after which the readability of the optical storage medium is deteriorated or destroyed, depends mainly on the inorganic substance and its respective concentration.

The optical storage medium may comprise also a solvent containing layer, which may be arranged as layer or at least one spot on one or both sides of the information layer. The solvent containing layer should contain a nearly non-volatile and/or hydrophilic solvent with optical qualities (e.g. the refraction index) similar to the substrate, e.g. polycarbonate. The solvent containing layer may comprise polymeric substances as polyglycole with the general formula (CH₂-CHR-O)ₙ-OH and/or polyacrylate with the general formula (CH₂-CH(COOR))ₙ. The solvent containing layer is suitable for constantly dispensing the reactive substances and enables their transport to the adjacent information layer and/or to avoid granulation.

The optical storage medium may also comprise surface active substances, like tensides. These surface active substances may, but need not be part of the solvent containing layer, and they also are suitable for constantly dispensing the reactive substances and enable their transport to the adjacent information layer and/or to avoid granulation.

The optical storage medium may comprise further H₂O-storing substances, which may be salts with combined H₂O like NaSO₄ x 10 H₂O, and/or H₂O-releasing substances, which may release H₂O through chemical reactions, like NaHCO₃. H₂O is necessary as reactive medium, solvent and/or dissociation medium for the concerned substances.

As mentioned in the third aspect of the invention, gaseous species are released by chemical reactions between the reactive substance and the information layer and by heat during reading information by an optical beam and/or the system temperature of the player. For example, gaseous H₂ may be formed due to chemical reactions within the advantageously acids and/or bases containing reactive substance. The release of the gaseous species may be accelerated by the presence of H₂O-storing substances. Due to the release of gaseous species vapour bubbles and/or drops form, which are locked in the information layer, the substrate and/or in between the information layer and the substrate and deteriorate the readability of the optically readable medium. These vapour bubbles and/or drops may lead to a delamination of the optically readable medium, and if the substances in the reactive substance have a waxy consistence, they may keep the shape of the bubbles and/or drops even after their diffusion out of the medium.

In the most advantageous embodiment of the invention all three aspects of the invention are combined for ensuring a maximum reliability of the destruction of the readability of the optical storage medium.

### Detailed description of the invention:

An optical storage medium comprises at least one substrate, at least one information layer for storing data and at least one reactive substance. The at least one reactive substance may be arranged at at least one spot or layer in contact with the information layer. The readability of the optical storage medium may be adjustably limited by a temporally defined deterioration of the readability, more precisely of the reflectivity of the reflective information layer. The deterioration of the readability may be initiated by the first use of the inventive storage medium by a customer, said in other words the deterioration of the readability may be initiated by heat applied by the laser beam of a disc drive and/or the system temperature of the player. Therefore the deterioration of the readability depends on the time after the first use. It can be adjustable that e.g. one day, one week or one month after the first use the optical storage medium will not longer be readable. Additional the deterioration of the readability may occur slowly, but also adjustable, during storing of the disc, without using/reading the disc. It can be adjustable that e.g. several weeks or months after production the optical storage medium will not longer be readable. In this case using/reading of the disc would accelerate the destruction process.

This may be achieved by a defined composition of substances, which are suitable to result in temporally defined chemical reactions with the information layer. The selection of substances, their compositions and concentrations, enables the manufacturer of optical storage media to define the life time of the optical storage medium during its production. If necessary, this is also possible in agreement with the consumer. Advantageously, the production of this optical storage medium with a temporally limited usability requires only minimal changes to the existing manufacturing processes for optical storage media and is therefore financially appealing.

Like this, the optical storage media with limited readability is attractive to the user, as it is not too expensive and the disadvantage of returning rentable media is omitted. Finally, for the content providers who want to provide their content through optical storage media with limited readability, the mechanism that limits readability of the media is very secure, does not enable any access to the content beyond the intended period of use and is definitely not easy to evade. Neither for the producer, nor for the content provider or the user are any further devices or tools necessary.

The chemical reactive substances contain inorganic substances like acids (see chemical reaction 1), bases (see chemical reaction 2), salts of metals and/or their hydrates, as CuCl₂, CuCl₂ x 2 H₂O hydrate (see chemical reaction 3), NaOH, Na-HCO₃, NaSO₄ x 10 H₂O hydrate and/or similar. Also salts of other metals may be used. These salts of metals should preferably have a standard electrode potential higher than -1.66 Volt, that is aluminium with H₂O = 0 Volt as point of reference. The reactive substance may be arranged at at least one spot or layer in contact with the information layer.

Chemical reaction 1: 2A1 + 6H⁺ + 6(residual ion of the acid)⁻ → 2Al(residual ion of the acid)₃ + 3H₂

Chemical reaction 2: 2Al + NaOH + 6H₂O → 2AlOH₃ + 3H₂ + NaOH

Chemical reaction 3: 2Al + 3CuCl₂x2H₂O → 2AlCl₃ + 3Cu (amorphous) + 6H₂O

The reactive substance is suitable for deteriorating or destroying the readability of the optical storage medium by destroying or attacking the information layer, as it is suitable to result in chemical reactions with the information layer, which are driven by H₂O. These chemical reactions comprise corrosion of the information layer and/or vapour lock in the information layer, the substrate and/or in between the information layer and the substrate.

The chemical reaction at the information layer, mostly a metallic aluminium layer, may be an electron migration or its support between the metallic aluminium and some reactive substances. This is also known as corrosion of the information layer and transforms the metallic aluminium in a non-metallic, oxidic chemical compound, which enables no or only poor reflection of the reading laser beam. This process of corrosion may be temporally controlled through the concentration and composition of the reactive substances.

One embodiment of the invention is nearly independent of the kind of information layer, is not limited to an optical disc with an aluminium information layer and works also with optical storage media with noble metals as reflective information layer. Here, reading out information by a laser beam is made impossible by deteriorating the optical reflection of the reading laser beam by means of delamination of the different layers of the optical storage medium. The delamination is forced by vapour lock, which means the generation and the lock of vapour drops and/or bubbles in the information layer, the substrate and/or in between the information layer and the substrate.

For deteriorating or destroying the readability of the optical storage medium the inorganic substances and/or the H₂O-driven chemical reactions and/or vapour lock may be sufficient. To ensure a maximum reliability of the destruction of the readability of the optical storage medium all three above mentioned aspects of the invention may be combined.

For achieving temporal influence, reactive substances in defined compositions and concentrations may be inserted in a solvent containing layer, which may be arranged as layer or at least one spot on one or both sides of the information layer. The solvent containing layer should contain a nearly non-volatile and/or hydrophilic solvent with optical qualities (e.g. the refraction index) similar to the substrate, e.g. polycarbonate. This solvent containing layer may comprise polymeric substances as polyglycole with the general formula (CH₂-CHR-O)ₙ-OH and/or polyacrylate with the general formula (CH₂-CH(COOR))ₙ. The solvent containing layer is suitable for constantly dispensing the reactive substances and enables their transport to the adjacent information layer and/or to avoid granulation.

The optical storage medium may also comprise surface active substances, which may, but need not be part of the solvent containing layer. The surface active substances may enable an equal moistening of the information layer and/or the substrate of the optical storage medium and/or avoid granulation. The additional substances may be calixarenes and/or tensides, more precisely all kinds of tensides with a basicity equal to the respective reactive substance and which do not influence the light of the reading laser beam. Like this they may be cation-tensides, like alkyl ammonium salts (e.g. cetyl-trimethylammoniumbromide (CTMAB) C₁₆H₃₂-N(CH₃)₃Br), anion-tensides, like alkyl-benzene-sulfonate (e.g. octadecyl-benzene-sulfonate-sodium (ODBSS) C₁₈H₃₇-C₆H₄-SO₄Na), amphoteric tensides, like alkyl-betaine (e.g. tetradecyl-dimethylammonium-propanesulfonate (TDDMAPS) C₁₄H₂₉-N(CH₃)₂-C₃H₆-SO₄) and/or similar.

Some polymeric substances, e.g. polyethylenglycole, may be inserted for constantly dispensing the reactive substances and may also improve the equal moistening of the information layer and/or the substrate of the optical storage medium.

The chemical reactions between the reactive substance and the information layer may be driven by a combination of heat during reading information by an optical beam and the diffusion of H₂O. Then, H₂O is necessary as reactive medium, solvent and/or dissociation medium for the concerned substances. One possibility therefore is diffusion of water vapour from the environment through the substrate, here mainly polycarbonate, into the reactive substances, which depends on the diffusion coefficient of the substrate. As the diffusion coefficient of the substrate may hardly be affected, there are nearly no possibilities for a temporal control of the chemical reaction and therefore nearly no possibilities for a temporal control of the deterioration of the readability of the information layer.

That is why H₂O-storing substances and/or H₂O-releasing substances, which release H₂O through chemical reactions, are in one advantageous embodiment of the invention inserted into the layer, which contains the reactive substances. H₂O-storing substances may be salts with combined water, like NaSO₄ x 10 H₂O (see chemical reaction 4) or similar, a H₂O-releasing substance may be NaHCO₃ (see chemical reaction 5) or similar. The combining of water is a process, where H₂O takes over defined positions in the lattice and is therefore necessary for the formation of the special structure of salts with combined water.

Chemical reaction 4: Na₂SO₄ x 10H₂O → increase of temperature → Na₂SO₄ + 10H₂O

Chemical reaction 5: 2NaHCO₃ → increase of temperature → Na₂CO₃ + H₂O + CO₂

In this embodiment, the determined release of H₂O out of H₂O-storing substances and/or H₂O-releasing substances through e.g. an increase of temperature is suitable to result in a temporal control of the deterioration of the readability of the information layer. As this increase of temperature may by achieved by first time reading the optical storage medium by a laser beam, this procedure may be used for accelerating the chemical reactions.

This means that readout of data is at first possible, but through the readout the chemical reactions, which leads to a deterioration of the readability of the information layer, may accelerate and so the data may remain available only for a reduced period of time after the first readout of date. In case the optical storage medium will not be red within a predetermined minimum period of time, the period of time for reading the data may anyway be limited by the diffusion of water vapour from the environment through the substrate.

In another advantageous embodiment, gaseous species are released during chemical reactions of the information layer with the reactive substances and/or during an increase in temperature during readout of data by a laser beam. In case of an e.g. aluminium information layer this happens according e.g. chemical reaction 1 or 2. In case of a less reactive information layer e.g. a gold or silver information layer this happens according e.g. chemical reaction 5 only by an increase in temperature during readout of data by a laser beam.

During slow chemical reactions and therefore slow possible release of the gaseous species the gaseous species may diffuse through the substrate into the environment without influencing the reading out process of the reflectivity of the information layer. But an advantageously accelerated process, e.g. by the presence of reactive substances, is suitable to result in a delamination of the layers of the optical storage medium. This delamination may occur also in case of a waxy consistency of the reactive substances containing layer, where the gaseous species may form bubbles and/or drops, which may keep their shape even after the diffusion of the gaseous species out of the optical storage medium into the environment.

These delaminated layers and/or the formed bubbles and/or drops possibly prevent a repeated readout of data by the user due to the changed optical qualities of the layers. The optional degrading reflection of the readout beam from the information layer, wherein information is encoded, leads to a defocused readout beam, which may not be evaluated by the respective media drive.

## Claims

1. An optical storage medium comprising at least one information layer and at least one reactive substance,
**characterised in that**
the reactive substance contains at least one inorganic substance.

2. An optical storage medium comprising at least one information layer and at least one reactive substance,
**characterised in that**
the reactive substance is suitable to result in chemical reactions which are driven by H₂O.

3. An optical storage medium comprising at least one substrate, at least one information layer and at least one reactive substance,
**characterised in that**
the reactive substance is suitable to result in vapour lock in the information layer, the substrate and/or in between the information layer and the substrate.

4. An optical storage medium according to claim 2 or 3, **characterized in that** the reactive substance contains at least one inorganic substance.

5. An optical storage medium according to claim 1 to 4, **characterized in that** the reactive substance is arranged as at least one spot or as a layer in contact with the information layer.

6. An optical storage medium according to claim 1 or 3, **characterized in that** chemical reactions in the reactive substance are driven by H₂O.

7. An optical storage medium according to one of the preceding claims, **characterized in that** the reactive substance is suitable to result in chemical reactions with the information layer.

8. An optical storage medium according to one of the preceding claims, **characterized in that** the reactive substance is suitable to result in corrosion of the information layer.

9. An optical storage medium according to one of the preceding claims, **characterized in that** the reactive substance is suitable for deteriorating or destroying the readability of the optical storage medium by destroying or attacking the information layer.

10. An optical storage medium according to one of the claims 1 to 9, **characterized in that** a time period after which the readability of the optical storage medium is deteriorated or destroyed, depends on the inorganic substance and its respective concentration.

11. An optical storage medium according to one of the preceding claims, **characterized in that** the reactive substance contains bases, acids, salts of metals and/or their hydrates.

12. An optical storage medium according to claim 11, **characterized in that** the salts of metals have a standard electrode potential higher than the standard electrode potential of aluminium.

13. An optical storage medium according to one of the preceding claims, **characterized in that** the reactive substance contains CuCl₂ and/or CuCl₂ x 2 H₂O hydrate.

14. An optical storage medium according to one of the preceding claims, **characterized in that** the reactive substance contains NaOH and/or NaHCO₃.

15. An optical storage medium according to one of the preceding claims, **characterized in that** the reactive substance contains NaSO₄ x 10 H₂O.

16. An optical storage medium according to one of the preceding claims, **characterized in that** the optical storage medium comprises a solvent containing layer, which is arranged as layer or at least one spot on one or both sides of the information layer.

17. An optical storage medium according to claim 16, **characterized in that** the solvent containing layer comprises polymeric substances as polyglycole and/or polyacrylate.

18. An optical storage medium according to claims 16 or 17, **characterized in that** the optical storage medium contains additional surface active substances.

19. An optical storage medium according to claim 18, **characterized in that** the additional surface active substances are tensides.

20. An optical storage medium according to one of the preceding claims, **characterized in that** the optical storage medium comprises H₂O-storing substances.

21. An optical storage medium according to claim 20, **characterized in that** the H₂O-storing substances are salts with combined H₂O.

22. An optical storage medium according to claim 21, **characterized in that** the salt with combined H₂O is NaSO₄ x 10 H₂O.

23. An optical storage medium according to one of the preceding claims, **characterized in that** the optical storage medium comprises H₂O-releasing substances, which release H₂O through chemical reactions.

24. An optical storage medium according to claim 23, **characterized in that** the H₂O-releasing substance is NaHCO₃.

25. An optical storage medium according to one of the preceding claims, **characterized in that** the chemical reactions between the reactive substance and the information layer are initiated by a combination of heat during reading information by an optical beam and the diffusion of H₂O.

26. An optical storage medium according to claim 25, **characterized in that** degradation of readability of the reactive substance accelerates with exposure of the reactive substance to heat during reading information by an optical beam.

27. An optical storage medium according to claim 26, **characterized in that** the optical beam is a laser beam.

28. An optical storage medium according to one of the preceding claims, **characterized in that** gaseous species are released by chemical reactions between the reactive substance and the information layer.

29. An optical storage medium according to claim 28, **characterized in that** the gaseous species are released by heat during reading information by an optical beam.

30. An optical storage medium according to claims 28 and 29, **characterized in that** a release of the gaseous species is accelerated by the presence of H₂O-storing substances.

31. An optical storage medium according to claim 29 and 30, **characterized in that** vapour bubbles and/or drops form due to the release of gaseous species.

32. An optical storage medium according to claim 31, **characterized in that** the vapour bubbles and/or drops are locked and deteriorate the readability of the optically readable medium.

33. An optical storage medium according to claims 31 or 32, **characterized in that** the vapour bubbles and/or drops lead to a delamination of the optically readable medium.

34. An optical storage medium according to claims 31 to 33, **characterized in that** the substances in the reactive substance have a waxy consistence, which keeps the shape of the bubbles and/or drops even after their diffusion out of the medium.
